# EUROPEAN PATENT APPLICATION

(11) **EP 4 803 575 A1**
(43) Date of publication of application: **09.09.2026**
(21) Application number: 23957093.0
(22) Date of filing: 31.10.2023
(51) Int. Cl.: C08L 23/06, C08J 9/26, H01M 50/449

(54) **MICROPOROUS MEMBRANE, AND PREPARATION METHOD THEREFOR AND APPLICATION THEREOF**

(71) Applicant: Shenzhen Senior Technology Material Co., Ltd., Shenzhen, Guangdong 518106 (CN)
(72) Inventor: CHEN, Yiping, Shenzhen, Guangdong 518106 (CN); GAO, Dongbo, Shenzhen, Guangdong 518106 (CN); LIN, Lujing, Shenzhen, Guangdong 518106 (CN); CAI, Qi, Shenzhen, Guangdong 518106 (CN)
(74) Representative: Elzaburu S.L.P.
(86) International application number: PCT/CN2023/128332
(87) International publication number: WO 2025/091215

(57) **Abstract**

The present application belongs to the technical field of separator material preparation, in particular to a microporous membrane, and a preparation method therefor and an application thereof. The microporous membrane includes a polymer and an ionic liquid. Based on a total mass of the microporous membrane, the microporous membrane includes 0.01 wt% - 5 wt% of the ionic liquid, optionally, 0.1 wt% - 5 wt% of the ionic liquid. By introducing an appropriate amount of the ionic liquid into the microporous membrane, the ionic liquid can be continuously or discontinuously adsorbed on surfaces of fibrils inside the microporous membrane. The ionic liquid is adsorbed on the surfaces of the fibrils inside the microporous membrane by means of lipophilic ends of the ionic liquid. This can not only eliminate internal static electricity, but also better avoid the reduction of ionic conductivity, increasing the migration speed of ions in an electrolyte solution, and reducing lithium dendrites. When the microporous membrane of the present application is used as separators of batteries, an appropriate amount of the ionic liquid is added to the microporous membrane, which is conducive to alleviating the problem of static electricity accumulation in the microporous membrane, and meanwhile enables the microporous membrane to have low thermal shrinkage, thereby avoiding the compromise of battery capacity and the occurrence of electrochemical safety issues.

## Description

### TECHNICAL FIELD

The present application belongs to the technical field of the preparation of separator materials, in particular to a microporous membrane, and a preparation method therefor and an application thereof.

### BACKGROUND

In the existing technologies, methylene dichloride is used to extract a plasticizer in a wet-processed membrane, and the membrane is dried to form a microporous membrane with an interconnected microporous structure. During the drying process, the membrane is prone to shrinkage in size, and pore size and porosity are also significantly changed, and a corresponding stress is generated. Its internal stress will be gradually released after winding, resulting in a series of appearance problems caused by excessive thermal shrinkage. Presently, the main methods to alleviate shrinkage include adopting specific low-molecular-weight polyethylene, adjusting draw ratio, or using heat setting methods, or applying base-membrane surface coating, etc. However, these methods will lead to new problems such as reduced separator strength and high energy consumption. It is difficult to balance the shrinkage rate with separator properties such as air permeability, pore size, and porosity.

Secondly, the dried microporous membrane accumulates static electricity when it comes into frictional contact with rollers during operation or subsequent processing. At present, the method for eliminating static electricity is adopting a static bar to eliminate static electricity; however this method cannot completely eliminate static electricity but can only remove it from the surface of the microporous membrane. High shrinkage rate and static electricity accumulation may lead to separator quality problems and difficulties in cell application and processing, and ultimately lead to reduced cell yield.

### SUMMARY

Therefore, the technical problem to be solved in the present application is to overcome defects of separators applied to batteries in the prior art, such as high shrinkage rate and static electricity accumulation, so as to provide a microporous membrane, and a preparation method therefor and an application thereof.

The applicant creatively discovered during the research that when methylene dichloride is used to enable a membrane to form an interconnected microporous structure in the prior art, the membrane is prone to shrinkage in size. This is because that the methylene dichloride has a low boiling point (39.8 °C at room temperature and pressure), and during evaporation, its heat absorption is large, evaporation speed is excessively fast and evaporation is non-uniform, such that the liquid methylene dichloride occupying the microporous structure inside the membrane is volatilized in an instant, and micropores of the membrane lose their supports in a short period of time, thus the membrane instantly shrinks in size under the tension of rollers, resulting in a lateral and large-area size reduction, significant changes in pore size and porosity, and corresponding stress. If the membrane has poor setting during subsequent process, its internal stress will be gradually released after winding, resulting in stress relaxation of the membrane product after winding, thereby resulting in poor winding quality (wrinkling, ridging, and other problems), as well as poor slitting quality (change in size and appearance after slitting and other problems).

In addition, the membrane accumulates static electricity when it comes into frictional contact with rollers during operation or subsequent processing. The methods for alleviating static electricity in the prior art may only remove static electricity from the surface of the membrane, and cannot remove static electricity continuously. With the passage of time, static electricity inside the membrane will transfer to the surface, and with the progress of the subsequent processing such as slitting and winding, the microporous membrane will accumulate static electricity again. The accumulated static electricity leads to winding misalignment, wrinkling, and unstable tension during the assembling of battery cells, resulting in misaligned winding or stacking of cells, especially large-format cells where stacking or winding effect is inferior. In view of this, the applicant has found that these problems could be effectively solved by introducing an ionic liquid into the microporous membrane. Therefore, the present application provides the following technical solutions.

In a first aspect, the present application provides a microporous membrane, where the microporous membrane includes a polymer and an ionic liquid, and the microporous membrane includes 0.01 wt% - 5 wt% of the ionic liquid based on a total mass of the microporous membrane.

For example, it can be 0.02 wt%, 0.05 wt%, 0.1 wt%, 0.2 wt%, 0.3 wt%, 0.4 wt%, 0.5 wt%, 0.6 wt%, 0.7 wt%, 0.8 wt%, 0.9 wt%, 1.0 wt%, 1.3 wt%, 1.5 wt%, 1.7 wt%, 1.9 wt%, 2.0 wt%, 2.2 wt%, 2.4 wt%, 2.6 wt%, 2.8 wt%, 3.0 wt%, 3.1 wt%, 3.3 wt%, 3.5 wt%, 3.7 wt%, 3.9 wt%, 4.1 wt%, 4.3 wt%, 4.5 wt%, 4.7 wt%, 4.9 wt%, 5.0 wt%, or in a range composed of any two of these values.

Optionally, the microporous membrane includes 0.1 wt% - 5 wt% of the ionic liquid. Optionally, the microporous membrane includes 0.3 wt% - 1.0 wt% of the ionic liquid.

The microporous membrane is provided with a plurality of fibrils, the plurality of fibrils are interconnected to form pores, and the ionic liquid is attached at least to surfaces of the fibrils inside the microporous membrane through lipophilic ends of the ionic liquid. The fibrils inside the microporous membrane are obtained after the polymer is subjected to directional tension when preparing the membrane, and the pores are formed after a plasticizer in the membrane is extracted by an extractant.

The microporous membrane satisfies at least one of the following:
a) an average pore size of the microporous membrane is 20 nm - 70 nm;
b) a standard deviation of a pore size of the microporous membrane is 2.5 nm - 28 nm; and
c) an absolute value of a difference between a sum of the average pore size and the standard deviation of the microporous membrane and a bubble-point pore size of the microporous membrane is not more than 15 nm; optionally, the absolute value of the difference is not more than 10 nm.

The average pore size of the microporous membrane may be, for example, 21 nm, 22 nm, 25 nm, 27 nm, 29 nm, 33 nm, 34 nm, 36 nm, 37 nm, 39 nm, 41 nm, 42 nm, 43 nm, 44 nm, 45 nm, 46 nm, 47 nm, 48 nm, 49 nm, 50 nm, 51 nm, 52 nm, 53 nm, 54 nm, 55 nm, 56 nm, 57 nm, 58 nm, 59 nm, 60 nm, 61 nm, 62 nm, 63 nm, 64 nm, 65 nm, 66 nm, 67 nm, 68 nm, 69 nm, or in a range composed of any two of these values.

The standard deviation of the pore size of the microporous membrane may be, for example, 2.9 nm, 3.2 nm, 3.8 nm, 4.2 nm, 4.6 nm, 4.9 nm, 5.5 nm, 5.8 nm, 6.3 nm, 6.5 nm, 6.8 nm, 7 nm, 7.2 nm, 7.8 nm, 8.2 nm, 8.6 nm, 9.0 nm, 9.4 nm, 9.8 nm, 10 nm, 10.2 nm, 10.6 nm, 11 nm, 11.5 nm, 11.8 nm, 12.2 nm, 12.8 nm, 13.2 nm, 13.6 nm, 14 nm, 14.4 nm, 14.8 nm, 15.2 nm, 15.6 nm, 16 nm, 16.4 nm, 16.8 nm, 17.2 nm, 17.8 nm, 18.2 nm, 18.8 nm, 19.5 nm, 19.8 nm, or in a range composed of any two of these values.

The absolute value of the difference between the sum of the average pore size and the standard deviation and the bubble-point pore size of the microporous membrane may be, for example, 0.5 nm, 0.8 nm, 1.2 nm, 1.4 nm, 1.5 nm, 1.8 nm, 2.0 nm, 2.2 nm, 2.4 nm, 2.6 nm, 2.8 nm, 3.2 nm, 3.5 nm, 3.8 nm, 4.0 nm, 4.2 nm, 4.6 nm, 4.9 nm, 5.5 nm, 5.8 nm, 6.4 nm, 6.8 nm, 7.0 nm, 7.2 nm, 7.5 nm, 7.8 nm, 8.2 nm, 8.6 nm, 9.0 nm, 9.4 nm, 9.8 nm, 10.2 nm, 10.6 nm, 11 nm, 11.5 nm, 11.8 nm, 12.2 nm, 12.8 nm, 13.2 nm, 13.6 nm, 14 nm, 14.4 nm, 14.8 nm, or in a range composed of any two of these values.

Optionally, a porosity of the microporous membrane is 30%-70%. The porosity of the microporous membrane may be, for example, 33%, 36%, 39%, 42%, 45%, 48%, 50%, 53%, 56%, 59%, 62%, 65%, 68%, 70%, or in a range composed of any two of these values.

The ionic liquid is at least one of an imidazolium-based ionic liquid, a pyridinium-based ionic liquid, an alkylsulfonic acid-based ionic liquid, a quaternary ammonium-based ionic liquid, a quaternary phosphonium-based ionic liquid, a pyrrolidinium-based ionic liquid, and a piperidinium-based ionic liquid.

Optionally, the ionic liquid is at least one of 1-ethyl-3-methylimidazolium tetrafluoroborate, 1-butyl-3-methylimidazolium tetrafluoroborate, 1-ethyl-3-methylimidazolium acetate, 1-butyl-3-methylimidazolium acetate, sodium 1-octadecyl sulfonate, sodium 1-pentadecyl sulfonate, 1-ethyl-3-methylimidazolium bis(fluorosulfonyl)imide, 1-butyl-3-methyl bis(fluorosulfonyl)imide, 1-ethyl-3-methyl bis(trifluorosulfonyl)imide, 1-butyl-3-methyl bis(trifluorosulfonyl)imide, dodecyl quaternary ammonium salt, octadecyl quaternary ammonium salt, 1-ethyl-3-methyl-4,5-dicyanoimidazolium bis(trifluoromethanesulfonyl)imide and N-alkyl pyridine.

Optionally, the polymer is a homopolymer selected from at least one of propylene, ethylene, butene, pentene, methyl methacrylate, tetrafluoroethylene, and difluoroethylene, a copolymer thereof, or a mixture thereof.

Optionally, the polymer is at least one of polyethylene, polypropylene, and ethylene-propylene copolymer.

In a second aspect, the present application provides a preparation method for a microporous membrane, including the following steps:
(1) obtaining a membrane containing a plasticizer;
(2) extracting the plasticizer from the membrane containing the plasticizer by using an extractant; where the extractant includes a first ionic liquid, and each extraction solution includes the extractant and the plasticizer; along a movement direction of the membrane containing the plasticizer, concentrations of the plasticizer in extraction solutions are reduced successively; and
(3) washing and setting.

The concentrations of the plasticizer in the extraction solutions in the step (2) are not higher than 7 wt%.

Optionally, in the step (2), at least three extraction solutions with a concentration gradient are provided along the movement direction of the membrane containing the plasticizer. By providing at least three extraction solutions with a concentration gradient, the circulation flow of the extraction solution can be reduced. This prevents the membrane surface from bearing excessive flow impact tension caused by the flow of the extraction solution, which would otherwise lead to deformation of the membrane surface and adversely affect the pore structure and thermal shrinkage of the final product; in addition, this can effectively save energy consumption costs in the extraction stage.

Optionally, in the step (2), along the movement direction of the membrane containing the plasticizer, a concentration of the plasticizer in a latter extraction solution is not higher than 85 wt% of a concentration of the plasticizer in a former extraction solution.

Optionally, along the movement direction of the membrane containing the plasticizer, a concentration of the plasticizer in a latter extraction solution is not higher than 65 wt% of a concentration of the plasticizer in a former extraction solution; the concentrations of the plasticizer in the extraction solutions can be controlled at optionally 65 wt%, and the concentrations of the plasticizer in the extraction solutions can be controlled to form a gradient difference, thereby better ensuring the flow impact tension of the extraction solutions borne by the membrane during the extracting process, while also better extracting the plasticizer from micropores of the membrane.

Optionally, in the step (2), a temperature of each extracting is 30-55°C.

Optionally, along the movement direction of the membrane containing the plasticizer, a temperature of a latter extracting is not higher than a temperature of a former extracting. By controlling the temperature of a latter extracting to be not higher than that of a former extracting in the multi-stage extracting, the plasticizer inside the membrane is gradually reduced after the plasticizer is extracted, so that the overall structure of the membrane loses support. Thus the extraction temperature is adjusted accordingly with the reduction of the plasticizer inside the membrane, so as to better control heat shrinkage of the membrane, and further better maintain the microporous structure of the membrane. At the same time, the appropriate extraction temperature can ensure better extraction effect and extraction efficiency, and the plasticizer inside the membrane can be extracted completely in a better and faster way.

Optionally, in the step (2), when the extracting is performed, a step of performing a first spraying using a first spray solution is further included.

Optionally, each first spray solution includes a second ionic liquid.

Furthermore, when the extracting is performed, a multi-stage overflow method can be used, and when the extracting is performed, an overflow direction of the extraction solution is opposite to the movement direction of the membrane.

In the washing step of the step (3), each washing solution includes the ionic liquid and a washing agent, the washing agent includes water, and concentrations of the ionic liquid in washing solutions are not higher than 10 wt%. Ensuring that the concentration of the ionic liquid in each washing solution is not higher than 10 wt% can effectively control the diffusion speed of the ionic liquid extractant from the membrane into the washing solution, thereby ensuring washing efficiency and washing quality.

Optionally, when the washing is performed, a step of spraying using a second spray solution is further included, and each second spray solution includes water.

Optionally, in the washing step of the step (3), the concentrations of the ionic liquid in the washing solutions are reduced successively along the movement direction of the membrane containing the plasticizer.

Optionally, along the movement direction of the membrane containing the plasticizer, a concentration of the ionic liquid in a latter washing solution for washing is not higher than 30 wt% of a concentration of the ionic liquid in a former washing solution for washing. By controlling the concentrations of the ionic liquid in the washing solutions to be reduced successively, washing efficiency can be better controlled. Furthermore, by controlling the concentration of the ionic liquid in a latter washing solution for washing being not higher than 30 wt% of the concentration of the ionic liquid in a former washing solution for washing, the residual content of the ionic liquid in the membrane can be better controlled, while maintaining high washing efficiency; secondly, the collapse of the microporous structure caused by the ionic liquid extractant in the membrane being washed away too quickly can also be better prevented, which would otherwise affect the quality of the microporous membrane.

In the washing step, the ionic liquid in the washing solutions is brought into washing tanks by the membrane containing the plasticizer along the movement direction thereof when the microporous membrane is prepared, so the ionic liquid in the washing solutions is from the first ionic liquid and the second ionic liquid.

Optionally, after the washing step and before the setting step in the step (3), a step of infiltrating using an infiltration solution is further included.

Optionally, the infiltration solution includes a third ionic liquid and water.

Optionally, a concentration of the ionic liquid in the infiltration solution is 0.05 wt% - 5 wt%.

The step (1) includes at least one step of performing a melt kneading method to obtain the membrane containing the plasticizer and performing stretching on the membrane containing the plasticizer.

Optionally, a temperature of the stretching is not lower than 60°C.

Optionally, the temperature of the stretching is not more than 200°C.

Optionally, the temperature of the stretching is not lower than 80°C.

Optionally, the temperature of the stretching is 80-140°C.

Optionally, when the stretching is performed along an MD direction, the stretching ratio is 5-10 times.

Optionally, when the stretching is performed along a TD direction, the stretching ratio is 8- 12 times. The MD direction refers to the movement direction of the membrane when the microporous membrane is prepared. The TD direction refers to a direction perpendicular to the movement direction of the membrane when the microporous membrane is prepared.

Optionally, a temperature of the melt kneading is not lower than 160 °C.

Optionally, the temperature of the melt kneading is not higher than 260 °C.

Optionally, the temperature of the melt kneading is not lower than 180 °C.

Optionally, the temperature of the melt kneading is 180-250°C.

Optionally, a mass fraction of the plasticizer in the membrane containing the plasticizer is 50 wt% - 85 wt%.

Optionally, the mass fraction of the plasticizer in the membrane containing the plasticizer is 60 wt% - 80 wt%.

In the step (3), a temperature of the setting is 100°C - 135°C, the shrinkage rate is not higher than 0.9, optionally, is not higher than 0.8.

The first ionic liquid, the second ionic liquid, and the third ionic liquid can be the same or different. The ionic liquid in the microporous membrane can be one thereof, or a mixture thereof.

All of the first ionic liquid, the second ionic liquid, and the third ionic liquid can be selected from at least one of an imidazolium-based ionic liquid, a pyridinium-based ionic liquid, an alkylsulfonic acid-based ionic liquid, a quaternary ammonium-based ionic liquid, a quaternary phosphonium-based ionic liquid, a pyrrolidinium-based ionic liquid, and a piperidinium-based ionic liquid.

All of the first ionic liquid, the second ionic liquid, and the third ionic liquid can be selected from at least one of 1-ethyl-3-methylimidazolium tetrafluoroborate, 1-butyl-3-methylimidazolium tetrafluoroborate, 1-ethyl-3-methylimidazolium acetate, 1-butyl-3-methylimidazolium acetate, sodium 1-octadecyl sulfonate, sodium 1-pentadecyl sulfonate, 1-ethyl-3-methylimidazolium bis(fluorosulfonyl)imide, 1-butyl-3-methyl bis(fluorosulfonyl)imide, 1-ethyl-3-methyl bis(trifluorosulfonyl)imide, 1-butyl-3-methyl bis(trifluorosulfonyl)imide, dodecyl quaternary ammonium salt, octadecyl quaternary ammonium salt, 1-ethyl-3-methyl-4,5-dicyanoimidazolium bis(trifluoromethanesulfonyl)imide and N-alkyl pyridine.

The plasticizer is an organic compound that can form a homogeneous solution with polyolefin at a temperature below its boiling point. Specifically, the plasticizer may be decahydronaphthalene, xylene, dioctyl phthalate, dibutyl phthalate, stearyl alcohol, oleyl alcohol, decanol, nonanol, diphenyl ether, n-decane, n-dodecane, paraffin oil, etc. The plasticizer may be selected from paraffin oil or dioctyl phthalate.

The above illustrate an optional preparation method for the microporous membrane of the present application, which is an optional preparation method that the applicant believes, is more beneficial to economic benefits and product quality in the research process. However, as long as the obtained microporous membrane has the characteristics that meet the present application, there is no limitation on the polymer type, solvent type, stretching method, extracting method, pore formation method, washing method, infiltrating method, the method of applying an ionic liquid into the microporous membrane, heat setting method, etc.

In a third aspect, the present application provides a battery, where the battery includes a separator, and the separator includes the above-mentioned microporous membrane or the microporous membrane prepared by the above-mentioned preparation method.

The technical solutions of the present application have the following advantages.
1. In the microporous membrane provided in the present application, the microporous membrane includes a polymer and an ionic liquid, and the microporous membrane includes 0.01 wt% - 5 wt% of the ionic liquid based on a total mass of the microporous membrane, optionally, 0.1 wt% - 5 wt% of the ionic liquid, and further optionally, 0.3 wt% - 1.0 wt% of the ionic liquid. By introducing an appropriate amount of the ionic liquid into the microporous membrane in the present application, the ionic liquid can be continuously or discontinuously adsorbed on the surfaces of the fibrils inside the microporous membrane. The ionic liquid is adsorbed on the surfaces of the fibrils inside the microporous membrane through the lipophilic ends of the ionic liquid. The hydrophilic ends are free ends. This can not only eliminate internal static electricity, but also better avoid the reduction of ionic conductivity, while increasing ion migration speed in the electrolyte, and reducing lithium dendrites. When the microporous membrane of the present application is used as separators of batteries, an appropriate amount of the ionic liquid is added to the microporous membrane, which is conducive to alleviating the problem of static electricity accumulation in the microporous membrane, and meanwhile enables the microporous membrane to have low thermal shrinkage, thereby avoiding the compromise of battery capacity and the occurrence of electrochemical safety issues.
   However, if the content of the ionic liquid in the microporous membrane is excessive, its air permeability, tensile strength and thermal shrinkage thereof will be poor. Secondly, due to the charging effect, ions in the ionic liquid intercalate into the positive and negative electrodes of the battery, incomplete deintercalation during discharging or the significantly larger diameters of cations and anions of the ionic liquid compared to lithium ions, would occupy more limited space in the intercalated electrode materials, or directly destroy the structures of the electrode materials, resulting in a certain degree of capacity fade. Thirdly, because the anions and cations in the ionic liquid may excessively chelate with components in the electrolyte, the viscosity of the electrolyte in liquid lithium-ion batteries may be affected to a certain extent, thereby reducing ionic conductivity.
2. In the microporous membrane provided in the present application, by controlling the pore structure of the microporous membrane, the ionic liquid can be more fully and uniformly adsorbed into the microporous membrane. Since the ionic liquid content exerts a certain influence on the pore structure of the micropores, controlling the pore structure of the microporous membrane from the perspective of battery application enables better synergy with an appropriate amount of the ionic liquid, thereby achieving favorable electrochemical performance.
3. The preparation method for the microporous membrane provided in the present application can effectively enable the ionic liquid to adsorb onto the fibril surfaces within the microporous membrane, and can control the content of the ionic liquid in the microporous membrane. It enables the membrane to continuously dissipate static electricity under both dynamic production conditions and static storage conditions, ensuring sufficient static electricity dissipation, and further ensuring good production quality and product quality. Compared with the prior technology of extraction processes using methylene dichloride, an absolute mean electrostatic force value of the membrane obtained by the preparation method in the present application is less than 800 V. After being wound and allowed to stand for a period of time, the electrostatic charge in the membrane gradually reaches a normal level, that is, the microporous membrane exhibits no obvious re-attraction phenomenon after the microporous membrane is unrolled from the membrane roll. Under the same conditions, the static electricity in the membrane obtained by the prior technology is difficult to dissipate, and an absolute mean electrostatic force value thereof is basically 1500 V - 5000 V, and after stored for one day the microporous membrane still exhibits obvious re-attraction phenomenon after unrolled.
   Secondly, in the drying process of the present application, the membrane surface is dried more uniformly, the tension is more controllable, resulting in more uniform stress of the membrane in all directions, minimal size change of the membrane before and after the drying process, and further enabling more complete stress release in the setting process. Thirdly, the preparation method in the present application is greener and more environmentally friendly, as it neither generates exhaust gas nor requires exhaust gas recovery treatment.
4. The preparation method for the microporous membrane provided in the present application adopts a multi-stage overflow method, and controls the gradient concentration change of the extracting, washing and other processes, thereby achieving controllable ionic liquid content in the microporous membrane and high production efficiency.

### BRIEF DESCRIPTION OF DRAWINGS

In order to illustrate the specific embodiments of the present application or the technical solutions in the prior art more clearly, the drawings required in the description of the specific embodiments or prior art will be introduced briefly hereinafter. Obviously, the drawings in the following description relate to some embodiments of the present application. For those skilled in the art, other drawings can be obtained based on these drawings without creative labor.

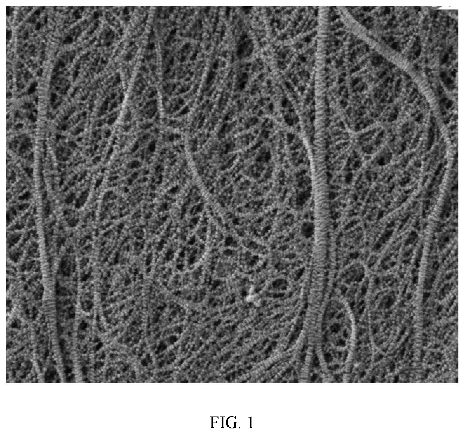

FIG. 1 is a scanning electron microscopy image of a microporous membrane in Example 1 of the present application (with a magnification of 20,000).

### DESCRIPTION OF EMBODIMENTS

The following embodiments are provided for a better understanding of the present application, and are not limited to the best embodiments and do not limit the content and protection scope of the present application. Any products identical or similar to the present application obtained under the inspiration of the present application or by combining the features of the present application with features in other prior art by anyone fall within the protection scope of the present application.

The term "longitudinal direction" used in the present application is also called an MD direction, which refers to a running direction of a device.

The term "lateral direction" used in the present application is also called a TD direction, which refers to a direction perpendicular to the running direction of the device.

The term "±" used in the present application refers to that a specific value includes variations thereof attributable to normal fluctuations in an actual process.

Examples where specific experimental procedures or conditions are not specified can be carried out in accordance with operations or conditions of conventional experimental procedures described in literatures in this field. Any reagents or instruments without specified manufacturers are all conventional reagent products commercially available.

### Example 1

The present example provides a preparation method for a microporous membrane, including the following steps:
(1) taking polyethylene resin (weight-average molecular weight: 90W) and liquid paraffin oil (kinematic viscosity: 45 mm²/s at 40°C) in a mass ratio of 23:77; adding them to a twin screw extruder to melt and mix to form a melt at an extruder temperature of 200 ± 5°C; extruding the melt through a die head; casting and cooling the melt at 20°C to form a precursor membrane; and performing MD stretching and TD stretching in sequence on the precursor membrane to obtain a polyethylene membrane containing the paraffin oil, where the MD stretching is performed at a temperature of 95°C with a draw ratio of 6 times, and the TD stretching is performed at a temperature of 110°C with a draw ratio of 8.5 times;
(2) extracting the paraffin oil in the membrane by passing the polyethylene membrane containing the paraffin oil through extraction tanks using a multi-stage overflow method, where in the multi-stage overflow method, an extraction tank 1, an extraction tank 2, an extraction tank 3, an extraction tank 4, an extraction tank 5, and an extraction tank 6 are included along a movement direction of the membrane, and the temperatures of respective extraction tanks are 55°C, 50°C, 45°C, 40°C, 40°C, and 35°C in turn; and performing a step of a first spraying on the membrane using a first spray solution when the multi-stage extraction is carried out, where the concentration of an extractant in each extraction solution in each extraction tank is controlled by independent overflow rate of each ionic liquid spray; the purpose of the first spraying is to supplement the extractant to ensure concentration difference of the extractant in extraction solutions in different extraction tanks, in order to improve and increase extraction efficiency; with the progress of the extracting, the extractant replaces the paraffin oil in the polyethylene membrane containing the paraffin oil, and the paraffin oil enters the extraction tank, and the paraffin oil and the extractant form the extraction solution; each of the extraction solutions in the extraction tanks 1-6 includes the extractant and the paraffin oil; the concentrations of the paraffin oil in the extraction solutions are 6 ± 0.2 wt%, 3.5 ± 0.2 wt%, 2 ± 0.1 wt%, 1.2 ± 0.02 wt%, 0.7 ± 0.02 wt%, 0.2 ± 0.01 wt% in turn; the extractant is 1-ethyl-3-methylimidazolium tetrafluoroboric acid ionic liquid, and the first spray solution is sodium 1-octadecyl sulfonate ionic liquid;
(3) conveying the membrane to a first washing tank, a second washing tank and a third washing tank sequentially for washing, where the temperature of each washing tank is 35 °C, the concentration of the ionic liquid in a washing solution in the first washing tank is 5.5 ± 0.2 wt%, the concentration of the ionic liquid in a washing solution in the second washing tank is 1.3 ± 0.1 wt%, the concentration of the ionic liquid in a washing solution in the third washing tank is 0.2 ± 0.02 wt%, and a washing agent in each washing solution is water; and performing a step of a second spraying using a second spray solution, where each second spray solution is water, the second spraying is performed in each washing tank by independent pure water, and the concentration of the ionic liquid in each washing solution in each washing tank is controlled by the overflow rate of each water spray; during the second spraying, water carries the ionic liquid in the membrane into the washing tank to form the washing solution, that is, each washing solution includes the ionic liquid washed down from the surface and micropores of the membrane, and water.

After the washing is completed, the membrane is conveyed to an infiltration tank at a temperature of 35°C, where an infiltration solution includes octadecyl quaternary ammonium salt and water, and the concentration of the ionic liquid in the infiltration solution is 1 wt%.

Then the membrane is conveyed to a drying oven, moisture from the inner and outer surfaces of the membrane is removed using a low-temperature and high-speed airflow at 20-40°C, using infrared irradiation, and using heat-medium roller contact heating at 40-70°C in turn. Then the membrane is conveyed to a transverse stretching oven for setting and finishing at a setting temperature of 110°C with a shrinkage rate of 0.7. Then the membrane is cooled to room temperature and is rolled up.

The present example provides a microporous membrane, including polyethylene and an ionic liquid, and the concentration of the ionic liquid in the microporous membrane is 0.8 wt% based on a total mass of the microporous membrane. The microporous membrane has a thickness of 12 µm, an average pore size of 40 nm, a standard deviation of 6.5 nm, a bubble-point pore size of 50 nm, and a porosity of 43%.

### Example 2

The present example provides a preparation method for a microporous membrane, including the following steps.
(1) Same as Example 1.
(2) Same as Example 1.
(3) The difference from Example 1 is that the concentration of the ionic liquid in the infiltration solution is 3 wt%.

The present example provides a microporous membrane, including polyethylene and an ionic liquid, and the concentration of the ionic liquid in the microporous membrane is 2.7 wt% based on a total mass of the microporous membrane. The microporous membrane has a thickness of 12 µm, an average pore size of 40 nm, a standard deviation of 6.5 nm, a bubble-point pore size of 48 nm, and a porosity of 41%.

### Example 3

The present example provides a preparation method for a microporous membrane, including the following steps.
(1) Same as Example 1.
(2) Same as Example 1.
(3) The differences from Example 1 are that the concentration of the ionic liquid in the washing solution for the third washing is 0.1 ± 0.02 wt%, and the membrane is not treated with an infiltration solution after the washing is completed, with the others being the same as Example 1.

The present example provides a microporous membrane, including polyethylene and an ionic liquid, and the concentration of the ionic liquid in the microporous membrane is 0.06 wt% based on a total mass of the microporous membrane. The microporous membrane has a thickness of 12 µm, an average pore size of 40 nm, a standard deviation of 6.5 nm, a bubble-point pore size of 52 nm, and a porosity of 44%.

### Example 4

The present example provides a preparation method for a microporous membrane, including the following steps.
(1) The differences from Example 1 are that the mass ratio of polyethylene powder and liquid paraffin oil is 20:80, the MD stretching is performed at a temperature of 95 °C with a draw ratio of 6 times, and the TD stretching is performed at a temperature of 118 °C with a draw ratio of 9.5 times.
(2) The difference from Example 1 is that the extractant 1-ethyl-3-methylimidazolium tetrafluoroborate in Example 1 is replaced with sodium 1-octadecyl sulfonate.
(3) The difference from Example 1 is that the ionic liquid octadecyl quaternary ammonium salt in the infiltration solution in Example 1 is replaced with N-alkyl pyridine.

The present example provides a microporous membrane, including polyethylene and an ionic liquid, and the concentration of the ionic liquid in the microporous membrane is 0.8 wt% based on a total mass of the microporous membrane. The microporous membrane has a thickness of 16 µm, an average pore size of 42 nm, a standard deviation of 7 nm, a bubble-point pore size of 53 nm, and a porosity of 48%.

### Example 5

The present example provides a preparation method for a microporous membrane, including the following steps.
(1) Same as Example 1.
(2) The differences from the Example 1 are that an extraction tank 1, an extraction tank 2, an extraction tank 3, and an extraction tank 4 are included in the multi-stage overflow method, and the temperatures of respective extraction tanks are 50°C, 45°C, 40°C, and 35°C in turn; the concentrations of the paraffin oil in the extraction solutions in the extraction tanks 1-4 are 3.25 ± 0.2 wt%, 1.2 ± 0.1 wt%, 0.6 ± 0.02 wt%, 0.1 ± 0.01 wt% in turn; the extractant in the extraction solutions is a mixed ionic liquid having octadecyl quaternary ammonium salt and sodium 1-octadecyl sulfonate with a mass ratio of 1:1; and the first spray solution is sodium 1-pentadecyl sulfonate.
(3) The differences from Example 1 are that when the washing is performed, the concentration of the ionic liquid in the washing solution in the first washing tank is 8.5wt ± 0.2 %, the concentration of the ionic liquid in the washing solution in the second washing tank is 1.5 ± 0.2 wt%, and the concentration of the ionic liquid in the washing solution in the third washing tank is 0.27 ± 0.02 wt%;

when the infiltrating is performed, the concentration of the ionic liquid in the infiltration solution is 4.5 wt%;
other steps are the same as those of Example 1.

The present example provides a microporous membrane, including polyethylene and an ionic liquid, and the concentration of the ionic liquid in the microporous membrane is 4.1 wt% based on a total mass of the microporous membrane. The microporous membrane has a thickness of 12 µm, an average pore size of 40 nm, a standard deviation of 6.5 nm, a bubble-point pore size of 45 nm, and a porosity of 38%.

### Example 6

The present example provides a preparation method for a microporous membrane, including the following steps.
(1) Same as Example 1;
(2) Same as Example 1;
(3) The differences from Example 1 are that the membrane is conveyed to one washing tank for washing, and during the washing, the concentration of the ionic liquid in the washing solution is 5.3 ± 0.2 wt%, and no infiltrating step is performed.

The present example provides a microporous membrane, including polyethylene and an ionic liquid, and the concentration of the ionic liquid in the microporous membrane is 4.9 wt% based on a total mass of the microporous membrane. The microporous membrane has a thickness of 12 µm, an average pore size of 40 nm, a standard deviation of 6.3 nm, a bubble-point pore size of 44 nm, and a porosity of 38%.

### Example 7

The present example provides a preparation method for a microporous membrane, including the following steps.
(1) Same as Example 1;
(2) Same as Example 1;
(3) The differences from the Example 1 are that the concentration of the ionic liquid in the washing solution in the first washing tank is 9 ± 0.2 wt%, the concentration of the ionic liquid in the washing solution in the second washing tank is 3 ± 0.1 wt%, and the concentration of the ionic liquid in the washing solution in the third washing tank is 1 ± 0.02 wt%, and no infiltrating step is performed.

The present example provides a microporous membrane, including polyethylene and an ionic liquid, and the concentration of the ionic liquid in the microporous membrane is 0.8 wt% based on a total mass of the microporous membrane. The microporous membrane has a thickness of 12 µm, an average pore size of 36 nm, a standard deviation of 6.8 nm, a bubble-point pore size of 40 nm, and a porosity of 38%.

### Comparative Example 1

The present comparative example provides a microporous membrane, including the following steps.
(1) Same as Example 1;
(2) A single extraction tank is used, where the temperature of the extraction tank is 45°C, and the concentration of the paraffin oil in the extraction solution is 7 ± 0.2 wt%.
(3) The differences from Example 1 are that the membrane is introduced to the washing tanks for the first washing and the second washing, and the concentration of the ionic liquid in the washing solution for the first washing is 12 ± 0.2 wt%, and the concentration of the ionic liquid in the washing solution for the second washing is 6.3 ± 0.2 wt%.

No infiltrating treatment is performed on the membrane after the washing is completed, and other operations are the same as those of Example 1.

The present example provides a microporous membrane, including polyethylene and an ionic liquid, and the concentration of the ionic liquid in the microporous membrane is 6 wt% based on a total mass of the microporous membrane. The microporous membrane has a thickness of 12 µm, an average pore size of 38 nm, a standard deviation of 10 nm, a bubble-point pore size of 41 nm, and a porosity of 35%.

### Comparative Example 2

The present comparative example provides a preparation method for a microporous membrane, including the following steps.
(1) Same as Example 1.
(2) The differences from Example 1 are that a single extraction tank is used, where the temperature of the extraction tank is 45°C, and the concentration of the paraffin oil in the extraction solution is 7.5 ± 0.2 wt%.
(3) The differences from Example 1 are that the membrane is introduced to the washing tanks for the first washing and the second washing, and the concentration of the ionic liquid in the washing solution for the first washing is 40 ± 0.2 wt%, and the concentration of the ionic liquid in the washing solution for the second washing is 12 ± 0.2 wt%.

No infiltrating treatment is performed on the membrane after the washing is completed, and other operations are the same as those of Example 1.

The present comparative example provides a microporous membrane, including polyethylene and an ionic liquid, and the concentration of the ionic liquid in the microporous membrane is 10 wt% based on a total mass of the microporous membrane. The microporous membrane has a thickness of 12 µm, an average pore size of fibril pores of 36 nm, a standard deviation of 12.5 nm, a bubble-point pore size of 41 nm, and a porosity of 31%.

### Experimental Examples

The present experimental examples provide performance test results of the microporous membranes provided in the examples and the comparative examples, specifically shown as follows.
(1) Thermal shrinkage and thickness of microporous membrane: they are conducted according to the provisions of GB/T 36363-2018.
(2) Static electricity accumulation of microporous membrane: the microporous membrane is placed in an environment having a temperature of 25 °C and a humidity of 40% for 1 H and 24H respectively; an electrostatic test using a Keyence handheld electrostatic tester is performed; in the electrostatic test a microporous membrane roll is unrolled to 50 meters along the MD direction using insulating latex gloves; a testing probe is positioned perpendicular to the surface of the membrane at a distance of about 3 cm - 5 cm; measurements are taken every 10 m along the MD direction, a total of 10 pieces of data are measured; measurements are taken every 10 m along the TD direction, a total of 10 pieces of data are measured; and an average of the 20 pieces of data in the MD and TD directions is calculated to obtain the static electricity accumulation of the microporous membrane.
(3) Tensile strength of microporous membrane: it is conducted according to the provisions of GB/T 1040.3-2006.
(4) Average pore size, bubble-point pore size, and standard deviation of microporous membrane: tests are performed at 25°C using PMI instrument (CHIA YUN INSTRUMENT INC., CFP-1500AE Model), where an infiltration solution is galwick having a surface tension of 15.9 dyne/cm at 25°C, and the pore size is represented in nm.
(5) Ionic conductivity of microporous membrane: four separator samples of the membrane with a diameter of 45 mm are cut from a flat position, and the samples are soaked in an electrolyte solution (1.0 M LiPF₆ in a EC/EMC/DMC solvent with a volume ratio of 3:3:4) and sealingly soaked for 30 min; about 15 ml of 1 mol/L of a fresh electrolyte (1.0 M LiPF₆ in the EC/EMC/DMC solvent with a volume ratio of 3:3:4) is poured into a surface-resistance test fixture; 1, 2, 3 and 4 separators are placed in the fixture for testing respectively; linear fitting is performed with the number of separator layers as the abscissa and the resistance of the separator as the ordinate to calculate the linear slope and goodness of fit; when the goodness of fit is greater than 0.999, the slope at this time is the surface resistance Q of the separator, and the ionic conductivity is calculated according to the formula: $σ = \frac{d}{Q} ,$
   where d is a thickness of a microporous membrane, with a unit of µm;
   Q is a surface resistance, with a unit of Ω•cm²; and
   σ is an ionic conductivity, with a unit of S/cm.
(6) Capacity retention rate of microporous membrane: a negative electrode slurry is prepared by graphite, conductive carbon black, and a styrene-butadiene rubber binder emulsion according to a mass ratio of 96:2:2; the slurry is coated on a copper foil to form a negative electrode sheet; a positive electrode slurry is prepared by lithium iron phosphate, a conductive agent, and a polyvinylidene fluoride binder according to a mass ratio of 97:1:2; the positive electrode slurry is coated on an aluminum foil to form a positive electrode sheet; and an electrolyte solution is prepared by adding 1.0 M LiPF₆ to an EC/EMC/DMC solvent with a volume ratio of 3:3:4.

The positive electrode sheet, a microporous membrane, and the negative electrode sheet are wound to form a battery cell; the battery cell is placed in an aluminum-plastic packaging bag; the above-mentioned electrolyte solution is injected thereinto; and after encapsulation, formation and other processes, a battery is formed.

The battery is discharged at a rate of 1C/1C at 25°C for 1000 cycles in turn, and its capacity retention rate is calculated by the formula: $Capacity retention rate = \frac{Capacity of battery after 1000 cycles}{Capacity of battery at 25 ° C before cycles} \times 100 %$

(7) Testing method for ionic liquid content in microporous membrane: a microporous membrane sample of 10 cm × 10 cm is taken and weighed to obtain a weight M₁; the microporous membrane sample is put into 100 ml of DCM solvent, ultrasonicating is performed at 100 Hz for 15 min, drying is performed at 80°C for 5 min, weighing is performed to obtain a weight M₂, and the ionic liquid content is calculated by the following formula: $Ionic liquid content in microporous membrane = \frac{{M}_{2} - {M}_{1}}{{M}_{1}} \times 100 % .$

**Table 1 Performance test results of the microporous membranes**

| Example | Tensile strength (kgf/cm²) | | Thermal shrinkage at 105°C for 1 H (%) | | Static electricity accumulation (V) | | Ionic conductivity (10⁻⁴S·cm⁻¹) | Capacity retention rate after 1000 cycles (%) |
|---|---|---|---|---|---|---|---|---|
| | MD | TD | MD | TD | Standing for 1 H | Standing for 24 H | | |
| Example 1 | 3252 | 2934 | 2.2 | 1.2 | 697 | 389 | 9.3 | 90 |
| Example 2 | 2912 | 2795 | 2.3 | 1.4 | 708 | 369 | 9.6 | 87 |
| Example 3 | 3450 | 2981 | 2.1 | 1.1 | 706 | 436 | 8.9 | 85 |
| Example 4 | 3109 | 2913 | 2.2 | 1.3 | 716 | 438 | 9.1 | 89 |
| Example 5 | 2746 | 2669 | 2.6 | 1.7 | 689 | 358 | 9.3 | 86 |
| Example 6 | 2678 | 2594 | 2.8 | 2 | 665 | 379 | 9.2 | 85 |
| Example 7 | 3215 | 2921 | 2.4 | 1.4 | 708 | 430 | 9.3 | 89 |
| Comparative Example 1 | 2198 | 2086 | 5.5 | 4.0 | 658 | 413 | 6.5 | 76 |
| Comparative Example 2 | 1979 | 1837 | 7.2 | 4.7 | 631 | 424 | 5.9 | 71 |

FIG. 1 is an electron microscopy image of the microporous membrane in Example 1 of the present application, from which it can be seen that the fibrils formed by stretching and orientation are interconnected to form a porous structure in the microporous membrane.

It can be seen from the experimental results in Table 1 that the microporous membrane in the present application has a good tensile strength (larger than 2590 kgf/cm² in the MD direction or in the TD direction), and low thermal shrinkage (at 105°C for 1 H, the thermal shrinkage rate in the MD direction is less than 3%, and the thermal shrinkage rate in the TD direction is less than 2%). The battery prepared by the microporous membrane also has good ionic conductivity (its conductivity is not lower than 8×10⁻⁴ S/cm) and good capacity retention rate (its capacity is not lower than 85% after 1000 cycles).

Compared with the Comparative Example1, when the ionic liquid in the microporous membrane is excessive, its heat shrinkage rate is higher and tensile strength decreases, which will affect the conductivity and capacity retention of the battery to a certain extent when the microporous membrane is used in the battery. Compared with the Comparative Example 2, the content of the ionic liquid in the microporous membrane obtained by a single-stage extraction process is higher, which will also affect its thermal shrinkage rate, tensile strength, and the conductivity and capacity retention rate of the battery.

Furthermore, according to the results of Example 1 and Example 7, when the concentration of the ionic liquid in the latter washing solution for washing is not higher than 30 wt% of the concentration of the ionic liquid in the former washing solution for washing, the pore structure of the obtained microporous membrane will collapse to some extent, and have increased thermal shrinkage, thereby affecting the quality of the microporous membrane. This indicates that in the present application, the control of the concentration of the ionic liquid in the latter washing solution for washing to be not higher than 30wt% of the concentration of the ionic liquid in the former washing solution for washing is beneficial to further improving the structure and quality of the microporous membrane.

Obviously, the above-mentioned examples are merely examples for clear illustration, and are not intended to limit the embodiments. For those skilled in the art, they can also make other different forms of changes or amendments based on the above descriptions. It is unnecessary and impossible to exhaustively list all embodiments herein. And the obvious changes or amendments derived therefrom still fall within the protection scope of the present invention.

## Claims

1. A microporous membrane, wherein the microporous membrane comprises a polymer and an ionic liquid, and the microporous membrane comprises 0.01 wt% - 5 wt% of the ionic liquid based on a total mass of the microporous membrane;optionally, the microporous membrane comprises 0.1 wt% - 5 wt% of the ionic liquid;
optionally, the microporous membrane comprises 0.3 wt% - 1.0 wt% of the ionic liquid.

2. The microporous membrane according to claim 1, wherein the microporous membrane is provided with a plurality of fibrils, the plurality of fibrils are interconnected to form pores, and the ionic liquid is attached at least to surfaces of the fibrils inside the microporous membrane through lipophilic ends of the ionic liquid.

3. The microporous membrane according to claim 1 or 2, wherein at least one of the following is satisfied:
a) an average pore size of the microporous membrane is 20 nm - 70 nm;
b) a standard deviation of a pore size of the microporous membrane is 2.5 nm - 28 nm; and
c) an absolute value of a difference between a sum of the average pore size and the standard deviation of the microporous membrane and a bubble-point pore size of the microporous membrane is not more than 15 nm;
optionally, the absolute value of the difference is not more than 10 nm.

4. The microporous membrane according to any one of claims 1-3, wherein the ionic liquid is at least one of an imidazolium-based ionic liquid, a pyridinium-based ionic liquid, an alkylsulfonic acid-based ionic liquid, a quaternary ammonium-based ionic liquid, a quaternary phosphonium-based ionic liquid, a pyrrolidinium-based ionic liquid, and a piperidinium-based ionic liquid;
optionally, the ionic liquid is at least one of 1-ethyl-3-methylimidazolium tetrafluoroborate, 1-butyl-3-methylimidazolium tetrafluoroborate, 1-ethyl-3-methylimidazolium acetate, 1-butyl-3-methylimidazolium acetate, sodium 1-octadecyl sulfonate, sodium 1-pentadecyl sulfonate, 1-ethyl-3-methylimidazolium bis(fluorosulfonyl)imide, 1-butyl-3-methyl bis(fluorosulfonyl)imide, 1-ethyl-3-methyl bis(trifluorosulfonyl)imide, 1-butyl-3-methyl bis(trifluorosulfonyl)imide, dodecyl quaternary ammonium salt, octadecyl quaternary ammonium salt, 1-ethyl-3-methyl-4,5-dicyanoimidazolium bis(trifluoromethanesulfonyl)imide and N-alkyl pyridine;
optionally, the polymer is a homopolymer selected from at least one of propylene, ethylene, butene, pentene, methyl methacrylate, tetrafluoroethylene, and difluoroethylene, a copolymer thereof, or a mixture thereof;
optionally, the polymer is at least one of polyethylene, polypropylene, and ethylene-propylene copolymer.

5. A preparation method for a microporous membrane, comprising the following steps:
(1) obtaining a membrane containing a plasticizer;
(2) extracting the plasticizer from the membrane containing the plasticizer by using an extractant; wherein the extractant comprises a first ionic liquid; each extraction solution comprises the extractant and the plasticizer; along a movement direction of the membrane containing the plasticizer, concentrations of the plasticizer in extraction solutions are reduced successively; and
(3) washing and setting.

6. The preparation method according to claim 5, wherein the concentrations of the plasticizer in the extraction solutions in the step (2) are not higher than 7 wt%;
optionally, in the step (2), along the movement direction of the membrane containing the plasticizer, at least three extraction solutions with a concentration gradient are provided;
optionally, in the step (2), along the movement direction of the membrane containing the plasticizer, a concentration of the plasticizer in a latter extraction solution is not higher than 85 wt% of a concentration of the plasticizer in a former extraction solution;
optionally, in the step (2), a temperature of each extracting is 30-55°C;
optionally, along the movement direction of the membrane containing the plasticizer, a temperature of a latter extracting is not higher than a temperature of a former extracting;
optionally, in the step (2), when the extracting is performed, a step of performing a first spraying using a first spray solution is further comprised;
optionally, each first spray solution comprises a second ionic liquid.

7. The preparation method according to any one of claims 5-6, wherein in the washing step of the step (3), each washing solution comprises the ionic liquid and a washing agent, the washing agent comprises water, and concentrations of the ionic liquid in washing solutions are not higher than 10 wt%;
optionally, when the washing is performed, a step of spraying using a second spray solution is further comprised, and each second spray solution comprises water;
optionally, in the washing step of the step (3), along the movement direction of the membrane containing the plasticizer, the concentrations of the ionic liquid in the washing solutions are reduced successively;
optionally, along the movement direction of the membrane containing the plasticizer, a concentration of the ionic liquid in a latter washing solution for washing is not higher than 30 wt% of a concentration of the ionic liquid in a former washing solution for washing;
optionally, after the washing and before the setting in the step (3), a step of infiltrating using an infiltration solution is further comprised;
optionally, the infiltration solution comprises a third ionic liquid and water;
optionally, a concentration of the ionic liquid in the infiltration solution is 0.05 wt% - 5 wt%.

8. The preparation method according to any one of claims 5-7, wherein the step (1) comprises at least one step of performing a melt kneading method to obtain the membrane containing the plasticizer and performing stretching on the membrane containing the plasticizer;
optionally, a temperature of the stretching is not lower than 60°C;
optionally, the temperature of the stretching is not more than 200°C;
optionally, a temperature of the melt kneading is not lower than 160 °C;
optionally, the temperature of the melt kneading is not higher than 260 °C;
optionally, a mass fraction of the plasticizer in the membrane containing the plasticizer is 50 wt% - 85 wt%.

9. The preparation method according to any one of claims 5-8, wherein in the step (3), a temperature of the setting is 100°C - 135°C, and a shrinkage rate is not higher than 0.9, optionally, is not higher than 0.8.

10. A battery, wherein the battery comprises a separator, and the separator comprises the microporous membrane according to any one of claims 1-4, or the microporous membrane prepared by the preparation method according to any one of claims 5-9.
